# EUROPEAN PATENT APPLICATION

(11) **EP 4 597 652 A1**
(43) Date of publication of application: **06.08.2025**
(21) Application number: 23871719.3
(22) Date of filing: 31.08.2023
(51) Int. Cl.: H01M 10/04, H01G 11/12, H01G 11/28, H01G 11/62, H01G 11/68, H01G 11/80, H01M 4/02, H01M 4/13, H01M 4/66, H01M 10/0568, H01M 10/0585

(54) **POWER STORAGE DEVICE**

(30) Priority: 27.09.2022 JP 2022153869
(71) Applicant: KABUSHIKI KAISHA TOYOTA JIDOSHOKKI, Kariya-shi, Aichi 448-8671 (JP)
(72) Inventor: NAKAGAWA, Yuta, Kariya-shi, Aichi 448-8671 (JP); KAWAI, Tomoyuki, Kariya-shi, Aichi 448-8671 (JP); NATSUI, Keisuke, Kariya-shi, Aichi 448-8671 (JP); ICHIKAWA, Yuki, Kariya-shi, Aichi 448-8671 (JP)
(74) Representative: TBK
(86) International application number: PCT/JP2023/031839
(87) International publication number: WO 2024/070479

(57) **Abstract**

A power storage device (10) comprises: a positive electrode (21) in which a positive electrode active material layer (21b) is formed on a first surface (21a1) of a positive electrode collector (21a); and a sealing part (24) that is adhered to the first surface (21a1) of the positive electrode (21). The sealing part (24) is formed from an acid-modified polyolefin resin. The positive electrode (21) comprises a carbon coating layer (M) that is provided at the portion of the first surface (21a1) of the positive electrode collector (21a) to which the sealing part (24) is adhered. The carbon coating layer (M) includes carbon particles and a coating layer binding agent. For the coating layer binding agent, the intensity ratio (P_{COO}/P_{CH}) of a peak (P_{COO}) that represents a COO structure to a peak (P_{CH}) that represents a CH structure on an IR absorption spectrum, as measured by infrared spectrophotometer, is 0.5-3.3.

## Description

### TECHNICAL FIELD

The present disclosure relates to a power storage device.

### BACKGROUND ART

Patent Literature 1 discloses a low-profile type power storage device formed by stacking separately produced power storage cells in series. Each power storage cell includes a cathode, an anode, and a separator. The cathode includes a cathode active material layer applied to a central portion of one surface of a cathode collector, which has the form of a foil. The anode includes an anode active material layer applied to a central portion of one surface of an anode collector, which has the form of a foil. The anode is arranged with the anode active material layer facing the cathode active material layer of the cathode. The separator is arranged between the cathode and the anode.

In addition, the above-described power storage cell includes a seal arranged between the cathode and the anode at the outer side of the cathode active material and the anode active material. The seal keeps the cathode collector and the anode collector distanced apart to prevent short-circuiting between the collectors and also seals the space between the cathode collector and the anode collector. The sealed space formed between the cathode collector and the anode collector accommodates liquid electrolyte.

### CITATION LIST

### Patent Literature

Patent Document 1: Japanese Laid-Open Patent Publication No. 2017-16825

### SUMMARY OF INVENTION

### Technical Problem

In the power storage device of the conventional structure, when load is applied to a part where the collector is adhered to the seal such as when, for example, the internal pressure of the sealed space increases, the seal may become separated from the collector. Separation of the seal may cause short-circuiting between the collectors and leakage of the liquid electrolyte.

The inventors of the present invention have found that the use of a seal composed of an acid-modified polyolefin resin and the application of a carbon coating layer containing a specific coating layer binder to a part adhered to the seal in the surface of a collector will increase the peel strength of the seal.

### Solution to Problem

In one aspect of the present disclosure, a power storage device includes electrodes, each including a collector having a first surface on which an active material layer is formed, and a seal arranged between the electrodes and adhered to the first surfaces of the collectors. The seal is composed of an acid-modified polyolefin resin. At least one of the electrodes includes a carbon coating layer applied to a part adhered to the seal in the first surface of the collector. The carbon coating layer contains carbon particles and a coating layer binder. The coating layer binder has, in an IR absorption spectrum measured by an infrared spectrophotometer, a strength ratio (P_{COO}/P_{CH}) from 0.5 to 3.3, inclusive, with respect to a peak (P_{COO}) in a range from 1680 cm⁻¹ to 1720 cm⁻¹, inclusive, to a peak (P_{CH}) in a range from 1400 cm⁻¹ to 1600 cm⁻¹, inclusive.

In a further aspect of the present disclosure, a power storage device includes a first electrode including a first collector having a first surface with a central portion on which a first active material layer is arranged, a second electrode including a second collector having a first surface with a central portion on which a second active material layer is arranged, with the second active material layer facing the first active material layer on the first electrode; a separator located between the first active material layer and the second active material layer; a seal located between the first electrode and the second electrode so as to surround the first active material layer and the second active material layer between the first electrode and the second electrode. The seal is adhered to the first surface of each of the first collector and the second collector so that the seal forms a sealed space between the first electrode and the second electrode to accommodate liquid electrolyte. The seal is composed of an acid-modified polyolefin resin. The first electrode includes a carbon coating layer applied to a part adhered to the seal in the first surface of the first collector. The carbon coating layer contains carbon particles and a coating layer binder. The coating layer binder has, in an IR absorption spectrum measured by an infrared spectrophotometer, a strength ratio (P_{COO}/P_{CH}) from 0.5 to 3.3, inclusive, with respect to a peak (P_{COO}) in a range from 1680 cm⁻¹ to 1720 cm⁻¹, inclusive, to a peak (P_{CH}) in a range from 1400 cm⁻¹ to 1600 cm⁻¹, inclusive.

### BRIEF DESCRIPTION OF DRAWINGS

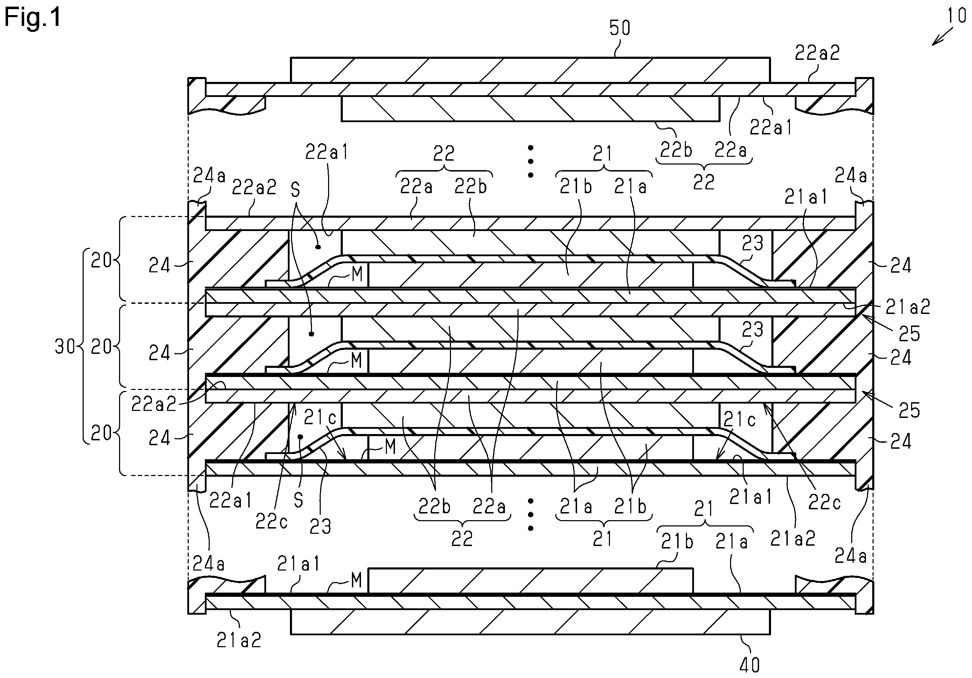

Fig. 1 is a cross-sectional view of a power storage device.

### DESCRIPTION OF EMBODIMENTS

A first embodiment of the present disclosure will now be described with reference to the drawings.

A power storage device 10 shown in Fig. 1 is, for example, a power storage module used as a battery for various types of vehicles such as a forklift, a hybrid electric vehicle, and a battery electric vehicle. The power storage device 10 is, for example, a rechargeable battery such as a nickel metal hydride rechargeable battery or a lithium-ion rechargeable battery. The power storage device 10 may be an electric double layer capacitor. In the present embodiment, the power storage device 10 exemplifies a lithium-ion rechargeable battery.

### Power Storage Device

As shown in Fig. 1, the power storage device 10 includes a cell stack 30 (laminate), in which power storage cells 20 are stacked in a stacking direction. In the description hereafter, the direction in which the power storage cells 20 are stacked is simply be referred to as the stacking direction. Each power storage cell 20 includes a cathode 21, an anode 22, a separator 23, and a seal 24. In the present embodiment, one of the cathode 21 and the anode 22 corresponds to a first electrode and the other one corresponds to a second electrode.

The cathode 21 includes a cathode collector 21a and a cathode active material layer 21b applied to a first surface 21a1 of the cathode collector 21a. In the present embodiment, the cathode 21, the cathode collector 21a, and the cathode active material layer 21b respectively corresponds to an electrode, a collector, and an active material layer.

In a plan view taken in the stacking direction (hereafter, simply referred to as plan view), the cathode active material layer 21b is formed on a central portion of the first surface 21a1 of the cathode collector 21a. The peripheral portion of the first surface 21a1 of the cathode collector 21a in plan view defines a cathode uncoated portion 21c, which is where the cathode active material layer 21b is not applied. The cathode uncoated portion 21c surrounds the cathode active material layer 21b in plan view.

The anode 22 includes an anode collector 22a and an anode active material layer 22b applied to a first surface 22a1 of the anode collector 22a. The anode active material layer 22b is formed on a central portion of the first surface 22a1 of the anode collector 22a in plan view. The peripheral portion of the first surface 22a1 of the anode collector 22a in plan view defines an anode uncoated portion 22c, which is where the anode active material layer 22b is not applied. The anode uncoated portion 22c surrounds the anode active material layer 22b in plan view.

The cathode 21 and the anode 22 are arranged facing each other in the stacking direction of the cathode active material layer 21b and the anode active material layer 22b. Thus, the direction in which the cathode 21 and the anode 22 face each other coincides with the stacking direction. The anode active material layer 22b is slightly larger than the cathode active material layer 21b. The region where the cathode active material layer 21b is formed is entirely located within a region in which the anode active material layer 22b is formed as viewed in a plan view taken in the stacking direction.

The cathode collector 21a includes a second surface 21a2 located at an opposite side of the first surface 21a1, and the anode collector 22a includes a second surface 22a2 located at an opposite side of the first surface 22a1. The cell stack 30 is constructed by stacking the power storage cells 20 so that the second surface 21a2 of a cathode collector 21a contacts the second surface 22a2 of an anode collector 22a. This connects the power storage cells 20 of the cell stack 30 in series.

In the cell stack 30, two adjacent power storage cells 20 in the stacking direction form a pseudo-bipolar electrode 25 with the cathode collector 21a and the anode collector 22a, which contact each other, acting as a single collector. The pseudo-bipolar electrode 25 includes the collector, which is constructed by stacking the cathode collector 21a and the anode collector 22a, the cathode active material layer 21b formed on one surface of the collector, and the anode active material layer 22b formed on the other surface.

The cathode collector 21a and the anode collector 22a may form a bipolar collector by joining the second surface 21a2 of the cathode collector 21a with the second surface 22a2 of the anode collector 22a. In this case, the cathode 21 and the anode 22 form the bipolar electrode 25, which includes the single bipolar collector of the joined cathode collector 21a and anode collector 22a.

The separator 23 is located between the cathode 21 and the anode 22 and separates the cathode 21 and the anode 22 to prevent short-circuiting, which would occur when the two electrodes come into contact, and allow for the passage of charge carriers such as lithium ions.

The separator 23 is, for example, a porous sheet or a nonwoven fabric containing a polymer that absorbs and holds liquid electrolyte. Examples of the material composing the separator 23 include polypropylene, polyethylene, polyolefin, and polyester. The separator 23 may have a monolayer structure or a multilayer structure. A multilayer structure may include, for example, an adhesive layer, a ceramic layer acting as a heat-resistant layer, and the like.

The seal 24 is arranged between the first surface 22a1 of the cathode collector 21a of the cathode 21 and the first surface 22a1 of the anode collector 22a of the anode 22 at the outer side of the cathode active material layer 21b and the anode active material layer 22b and is adhered to both the cathode collector 21a and the anode collector 22a. The seal 24 insulates the cathode collector 21a from the anode collector 22a and prevents short-circuiting between the collectors.

The seal 24 extends along the peripheral portions of the cathode collector 21a and the anode collector 22a in plan view and has the form of a frame surrounding the cathode active material layer 21b and the anode active material layer 22b. The seal 24 is located between the cathode uncoated portion 21c in the first surface 21a1 of the cathode collector 21a and the anode uncoated portion 22c in the first surface 22a1 of the anode collector 22a.

A sealed space S surrounded by the frame-shaped seal 24, the cathode 21, and the anode 22 is formed in each power storage cell 20. The separator 23 and liquid electrolyte are accommodated in the sealed space S. The peripheral portion of the separator 23 is embedded in the seal 24.

The seal 24 closes the sealed space S between the cathode 21 and the anode 22 so that the liquid electrolyte does not leak out of the sealed space S. The seal 24 also prevents moisture outside the power storage device 10 from entering the sealed space S. Further, the seal 24 prevents, for example, gas generated from the cathode 21 or the anode 22 due to a charge or discharge reaction from leaking out of the power storage device 10.

The seal 24 of each power storage cell 20 includes a peripheral portion 24a extending outward from the edges of the cathode collector 21a and the anode collector 22a. The peripheral portion 24a projects from the edges of the cathode collector 21a and the anode collector 22a in a direction orthogonal to the stacking direction. In the power storage cells 20 that are adjacent in the stacking direction, the peripheral portions 24a of the seals 24 are adhered together and integrated. Examples of a method for adhering adjacent seals 24 include known welding methods such as heat welding, ultrasonic welding, and infrared welding.

The power storage device 10 includes two energizing bodies, namely, a cathode energizing plate 40 and an anode energizing plate 50, sandwiching the cell stack 30 in a stacking direction of the cell stack 30. The cathode energizing plate 40 and the anode energizing plate 50 are each formed of a material having superior conductivity.

The cathode energizing plate 40 is electrically connected to the second surface 21a2 of the cathode collector 21a in the cathode 21 located at one of the outermost ends in the stacking direction. The anode energizing plate 50 is electrically connected to the second surface 22a2 of the anode collector 22a in the anode 22 located at the other outermost end in the stacking direction.

The power storage device 10 is charged and discharged through terminals of the cathode energizing plate 40 and the anode energizing plate 50. The cathode energizing plate 40 may be formed from, for example, the same material as the cathode collector 21a. The cathode energizing plate 40 may be formed by a thicker metal plate than the cathode collectors 21a of the cell stack 30. The anode energizing plate 50 may be formed from, for example, the same material as the anode collector 22a. The anode energizing plate 50 may be formed by a thicker metal plate than the anode collectors 22a of the cell stack 30.

The cathode collector 21a, the anode collector 22a, the cathode active material layer 21b, the anode active material layer 22b, the liquid electrolyte, and the seal 24 will now be described in detail.

### Cathode Collector and Anode Collector

The cathode collector 21a is a chemically inert electrical conductor that allows current to flow continuously to the cathode active material layer 21b when the lithium-ion rechargeable battery is being discharged or charged. One example of the cathode collector 21a is an aluminum collector having an aluminum surface, which becomes the first surface 21a1. The aluminum collector may be a mono-material body entirely composed of aluminum or a composite body including a part composed of aluminum and a part composed of a material other than aluminum. An example of a mono-material body is an aluminum foil. Examples of a composite body include a multilayer structure in which a layer forming the first surface 21a1 is an aluminum layer, and a substrate with a surface including the first surface 21a1 covered by an aluminum film.

Examples of a material other than aluminum include a metal material, a conductive resin material, and a conductive inorganic material. Examples of a metal material include copper, nickel, titanium, and stainless steel (e.g., SUS304, SUS316, SUS301, and SUS304 as classified under JIS G 4305:2015). The conductive resin material may be, for example, a conductive polymer material or a resin in which a conductive filler is added, when necessary, to a non-conductive polymer material. The aluminum collector may have the form of, for example, a foil, or sheet, or a film. The aluminum collector has a thickness of, for example, 1 to 100 µm.

The anode collector 22a is a chemically inactive electrical conductor that allows current to flow continuously to the anode active material layer 22b when the lithium-ion rechargeable battery is being discharged or charged.

One example of the anode collector 22a is a copper collector having a copper surface, which becomes the first surface 22a1. The copper collector may be a mono-material body entirely composed of copper or a composite body including a part composed of copper and a part composed of a material other than copper. An example of a mono-material body is a copper foil. Examples of a composite body include a multilayer structure in which a layer forming the first surface 22a1 is a copper layer, and a substrate with a surface including the first surface 22a1 covered by a copper film.

Examples of a material other than copper include a metal material, a conductive resin material, and a conductive inorganic material. Examples of a metal material include aluminum, nickel, titanium, and stainless steel (e.g., SUS304, SUS316, SUS301, and SUS304 as classified under JIS G 4305:2015). The conductive resin material may be, for example, a conductive polymer material or a resin in which a conductive filler is added, when necessary, to a non-conductive polymer material. The copper collector may have the form of, for example, a foil, or sheet, or a film. The aluminum collector has a thickness of, for example, 1 to 100 µm.

In one example of a preferred combination of the cathode collector 21a and the anode collector 22a, the cathode collector 21a is formed by an aluminum foil and is an aluminum collector, and the anode collector 22a is formed by a copper foil and is a copper collector. Examples of a bipolar collector include a collector formed by adhering aluminum foils together, a collector formed by adhering an aluminum foil and a copper foil together, and a collector formed by plating the surface of an aluminum foil with copper.

A carbon coating layer M is applied to the first surface 21a1 of the cathode collector 21a. The carbon coating layer M will be described in detail later.

### Cathode Active Material and Anode Active Material

The cathode active material layer 21b contains a cathode active material allowing for the storage and release of charge carriers such as lithium ions. The cathode active material may be a substance that is usable as the cathode active material of a lithium-ion rechargeable battery, such as a lithium composite metal oxide having a layered rock-salt structure, a metal oxide having a spinel structure, and a polyanion compound. Further, two or more types of cathode active materials may be used together. In the present embodiment, the cathode active material layer 21b contains an olivine type lithium iron phosphate (LiFePO₄), which is a polyanion compound.

Any element, alloy, or compound allowing for the storage and release of charge carriers such as lithium ions may be used as the anode active material layer 22b. Examples of an anode active material include Li, carbon, a metal compound, an element that can be alloyed with lithium, and a compound of an element that can be alloyed with lithium. Examples of carbon include natural graphite, artificial graphite, hard carbon (non-graphitizable carbon), or soft carbon (graphitizable carbon). The artificial graphite may be high-orientation graphite or mesocarbon microbeads. Examples of an element that can be alloyed with lithium include silicon and tin. In the present embodiment, the anode active material layer 22b contains graphite, which is a carbon material.

The cathode active material layer 21b and the anode active material layer 22b (hereafter, simply referred to as the active material layers) may each contain, when necessary, a conductive agent for increasing the electric conductivity, a binder, an electrolyte (polymer matrix, ion-conductive polymer, liquid electrolyte, etc.), a supporting electrolyte salt (lithium salt) for increasing the ion conductivity, and the like. The components contained in the active material layer, the compound ratio of the components, and the thickness of the active material layer are not particularly limited, and conventional knowledge of lithium-ion rechargeable batteries may be appropriately referenced.

A conductive agent is added to increase the conductivity of the cathode 21 or the anode 22. Examples of a conductive agent include acetylene black, carbon black, and graphite.

Examples of a binder include a fluorine-containing resin such as polyvinylidene fluoride, polytetrafluoroethylene, and fluoro-rubber; a thermoplastic resin such as polypropylene and polyethylene; an imide resin such as polyimide and polyamide imide; an alkoxysilyl-containing resin; an acrylic resin such as poly (metha) acrylic acid; styrene-butadiene rubber; carboxymethyl cellulose; an alginate such as sodium alginate and ammonium alginate; a water-soluble cellulosic ester cross-link; and a starch-acrylic acid graft polymer. These binders may be used alone or in combination. Examples of a solvent or a dispersion media include water and N-methyl-2-pyrrolidone.

The method for forming the active material layer on the surfaces of the cathode collector 21a and the anode collector 22a is not particularly limited, and a known process such as a roll coating process may be performed.

To improve the thermal stability of the cathode 21 or the anode 22, the heat-resistant layer described above may be applied to the surface of the active material layer.

The weight per unit area of the active material layer is not particularly limited, and conventional knowledge of lithium-ion rechargeable batteries may be appropriately referenced. Preferably, the weight per unit area of the active material layer is increased to increase the energy density of the power storage cells 20. The weight per unit area of the cathode active material layer 21b is 55 to 90 mg/cm², preferably 60mg/cm² or greater, and, more preferably, 70 mg/cm² or greater. The weight per unit area of the anode active material layer 22b is, for example, 25 to 45 mg/cm², and, preferably, 30 mg/cm² or greater.

### Seal

The seal 24 is composed of an acid-modified polyolefin resin. Examples of an acid-modified polyolefin resin include acid-modified polyethylene, acid-modified polypropylene, acid-modified isoprene, and acid-modified polybutene. Examples of acid-modified groups include the carboxylic acid group, maleic acid group, and the maleic anhydride group. The acid-modified polyolefin resin composing the seal 24 may be of one type or a combination of two or more types. The acid-modified polyolefin resin composing the seal 24 may be a thermoplastic resin or a thermosetting resin.

The acid-modified polyolefin resin composing the seal 24 may have a melting point Tm1 in, for example, a range from 90□ to 1700, inclusive.

The seal 24 has a thickness, for example, preferably, in a range from 50 µm to 1000 µm, inclusive, and more preferably, in a range from 100 µm to 800 µm, inclusive. The thickness of the seal 24 refers to the thickness of the part located between the first surface 21a1 of the cathode collector 21a and the first surface 22a1 of the anode collector 22a.

The seal 24 is adhered to the first surface 21a1 of the cathode collector 21a, more specifically, to the carbon coating layer M applied to the first surface 21a1. The seal 24 is also adhered to the first surface 22a1 of the anode collector 22a.

### Liquid Electrolyte

The liquid electrolyte includes a nonaqueous solvent and an electrolyte salt, which is dissolved in the nonaqueous solvent. The electrolyte salt may be a known lithium salt such as LiClO₄, LiAsF₆, LiPF₆, LiBF₄, LiCF₃SO₃, LiN(FSO₂)₂, and LiN(CF₃SO₂)₂. The nonaqueous solvent may be a known solvent such as a cyclic carbonate, a cyclic ester, a chain carbonate, a chain ester, or an ether. Two or more of these solvents may be used in combination.

One example of the liquid electrolyte contains a fluorine-containing metal salt as the electrolyte salt. Examples of the fluorine-containing metal salt include LiPF₆, LiBF₄, and LiAsF₆. When the fluorine-containing metal salt is contained, the ratio of the fluorine-containing metal salt occupying the electrolyte salt is, for example, 50 mass% or greater.

### Carbon Coating Layer

The carbon coating layer M applied to the first surface 21a1 of the cathode collector 21a will now be described.

In the present embodiment, the carbon coating layer M is applied to the entire first surface 21a1 of the cathode collector 21a. Thus, the first surface 21a1 of the cathode collector 21a is adhered by the carbon coating layer M to the seal 24. In other words, the seal 24 is adhered to the carbon coating layer M, which is applied to the first surface 21a1 of the cathode collector 21a.

The carbon coating layer M contains carbon particles and a coating layer binder.

The carbon particles may be of a known carbon material used for the carbon coating layer such as graphite, acetylene black, or the like. The ratio of the carbon particles contained in the carbon coating layer M is, for example, in a range from 13 mass% to 90 mass%, inclusive.

The coating layer binder is composed of a material including a structure expressed by "-COO-" (hereafter, referred to as the COO structure) and a structure expressed by "-CH" (hereafter, referred to as the CH structure) in a chemical formula, with the ratio of the structures being in a specific range.

In detail, the coating layer binder has, in an IR absorption spectrum measured by an infrared spectrophotometer, a peak indicating a COO structure and a peak indicating a CH structure. The strength ratio of the two peaks is a specific ratio. In the IR absorption spectrum, the peak indicating a COO structure is within a range from 1680cm⁻¹ to 1720cm⁻¹, inclusive. In the IR absorption spectrum, the peak indicating the CH is within a range from 1400cm⁻¹ to 1600cm⁻¹, inclusive.

The strength ratio (P_{COO}/P_{CH}) of the peak (P_{COO}) indicating the COO structure to the peak (P_{CH}) indicating the CH structure is in the range of 0.5 to 3.3, inclusive. The use of the coating layer binder of which the strength ratio is within the above range delays aging-related peel strength deterioration of the seal 24.

The strength used for the calculation of the strength ratio is a transmitted light absorption A* (=log(1/R)) calculated from a measured transmitted reflectance R, and is a value obtained by subtracting background from the transmitted light absorption A*. Further, the strength of peak (P_{CH}) and the strength of peak (P_{COO}) refer to the maximum strength at each peak.

Examples of the material composing the coating layer binder include an acrylic resin and carboxy-modified styrene-butadiene rubber. Preferably, the material composing the coating layer binder is an acrylic resin.

Examples of an acrylic resin include homopolymer of an acrylic monomer such as acrylic acid, methacrylic acid, and (metha) acrylic acid ester; and a (metha) acrylic copolymer including the acrylic monomer described above. In the present embodiment, (metha) acrylic acid refers to an acrylic acid or a methacrylic acid.

Examples of a (metha) acrylic acid ester include methyl (metha) acrylate, ethyl (metha) acrylate, isopropyl (metha) acrylate, n-butyl (metha) acrylate, and isobutyl (metha) acrylate.

In the (metha) acrylic copolymer, other comonomers that are copolymerized with the acrylic monomer include α-olefin, styrene, α-methylstyrene, vinyl toluene, acrylonitrile, methacrylonitrile, and vinyl acetate. These comonomers may exist in the acrylic resin as a random copolymer, a graft copolymer, or a block copolymer. Examples of a (metha) acrylic copolymer include a silicon-modified acrylic styrene resin, a carboxy modified acrylic styrene resin, and a hydroxyl-modified acrylic resin.

The coating layer binder may be composed of one material type or a combination of two or more material types. When the coating layer binder is a mixture of two or more material types, the mixture ratio and the like of the entire coating layer binder is adjusted so that the strength ratio is within the range described above.

The coating layer binder has a glass-transition temperature Tg2 in, for example, a range from 0□ to 1500, inclusive. When heat welding is performed to adhere the seal 24, the seal material, which is the material of the seal 24, is preferably heated to a temperature that is greater than the glass-transition temperature Tg2 of the coating layer binder and greater than or equal to the melting point Tm1 of the acid-modified polyolefin resin composing the seal 24. In this case, when the seal 24 is heated for adhesion, the coating layer binder in the carbon coating layer M softens thereby allowing the coating layer binder to be readily compatible with the seal 24. Thus, preferably, the glass-transition temperature Tg2 of the coating layer binder is lower than the melting point Tm1 of the acid-modified polyolefin resin composing the seal 24 (Tg2<Tm1). The difference between the melting point Tm1 of the acid-modified polyolefin resin and the glass-transition temperature Tg2 of the coating layer binder (melting point Tm1-Tg2) is, for example, in a range from 5□ to 1000, inclusive.

Preferably, the carbon coating layer M has a thickness, for example, in a range from 0.1 µm to 5 µm, inclusive, preferably, in a range from 0.5 µm to 2 µm, inclusive.

The carbon coating layer may contain other components such as a dispersant. An example of a dispersant is carboxy ethylcellulose.

A method for manufacturing the power storage device 10 in accordance with the present embodiment will now be described.

The power storage device 10 is manufactured by sequentially performing an electrode formation step, a power storage cell formation step, and a cell stack formation step. As one example, a case in which is the cathode collector 21a is formed by an aluminum foil, and the anode collector 22a is formed by a copper foil will now be described.

### Electrode Formation Step

The electrode formation step includes a cathode formation step of forming the cathode 21 and an anode formation step of forming the anode 22.

In the cathode formation step, the carbon coating layer M is first formed on the first surface 21a1 of an aluminum foil acting as the cathode collector 21a. Prior to the formation of the carbon coating layer M, the first surface 21a1 of the aluminum foil undergoes a corona discharging process. The corona discharging process forms a hydrophilic group (OH group) on the first surface 21a1 of the aluminum foil. The carbon coating layer M may be formed through a known process employed for coating formation such as a solution process or a deposition process.

One example of a solution process will now be described. Carbon particles, a coating layer binder, and an aqueous solvent are first kneaded to prepare a carbon paste. The carbon paste is applied to the entire first surface 21a1 of the cathode collector 21a to form a film having a predetermined thickness. The formed film is dried and hardened to form the carbon coating layer M. The film of the carbon paste is hardened by, for example, drying and volatizing the solvent, heating the film to a temperature greater than or equal to the glass-transition temperature Tg2 of the coating layer binder, and then cooling and solidifying the film. Examples of the aqueous solvent used for the carbon paste include water, and a solvent mixture of water and an organic solvent. An example of a solvent mixture using an organic solvent is N-methyl-2-pyrrolidone (NMP).

When forming the bipolar electrode 25 that includes the bipolar collector, instead of using an aluminum foil as the cathode collector 21a, a collector formed by adhering together aluminum foils, a collector formed by adhering together an aluminum foil and a copper foil, a collector formed by plating the surface of an aluminum foil with copper, or the like is used.

Then, a cathode mixture material, which becomes the cathode active material layer 21b, is applied to the central portion of the first surface 21a1 of the aluminum foil, on which the carbon coating layer M has been formed, and solidified to have a predetermined thickness. A solidifying process corresponding to the cathode mixture material is performed to form the cathode active material layer 21b.

The anode formation step is not particularly limited, and a known process may be performed to form the anode 22, which includes the anode collector 22a and the anode active material layer 22b. For example, an anode mixture material, which becomes the anode active material layer 22b, is applied to the first surface 22a1 of the copper foil acting as the anode collector 22a, and then a solidified process corresponding to the anode mixture material is performed to form the anode 22.

### Power Storage Cell Formation Step

In the power storage cell formation step, the cathode 21 and the anode 22 are arranged sandwiching the separator 23, with the cathode active material layer 21b and the anode active material layer 22b facing each other in the stacking direction. Further, a seal material, which becomes the seal 24, is arranged between the cathode 21 and the anode 22 at the outer side of the cathode collector 21a and the anode collector 22a. The seal material is cut out from a resin sheet of an acid-modified polyolefin resin to have the same shape as the seal 24 in plan view. The seal material is arranged on the first surface 21a1 of the cathode collector 21a in contact with the carbon coating layer M.

Then, the cathode 21, the anode 22, and the separator 23 are welded with and adhered to the seal material to form an integrated assembly of the cathode 21, the anode 22, the separator 23, and the seal 24. Examples of the process for adhering the seal material include known processes such as heat welding, ultrasonic welding, and infrared welding.

When forming the seal 24 through heat welding, the seal material is heated to a temperature that is greater than or equal to the melting point Tm1 of the acid-modified polyolefin resin, which composes the seal material, and then cooled and solidified. If the glass-transition temperature Tg2 of the coating layer binder is lower than the melting point Tm1 of the acid-modified polyolefin resin, the coating layer binder will soften, thereby allowing the coating layer binder to be readily compatible with the acid-modified polyolefin resin.

Liquid electrolyte is injected into the sealed space S inside the assembly through an injection port formed in part of the seal 24. Then, the injection port is closed. This forms the power storage cell 20.

### Cell Stack Formation Step

In the cell stack formation step, the power storage cells 20 are stacked so that the second surface 21a2 of a cathode collector 21a faces the second surface 22a2 of an anode collector 22a. Then, the peripheral portions 24a of the seals 24 in the power storage cells 20 that are adjacent in the stacking direction are adhered together to integrate the power storage cells 20.

The cathode energizing plate 40 is then arranged on and fixed to, in an electrically connected state, the second surface 21a2 of the cathode collector 21a in the cathode 21 located at one of the outermost ends in the stacking direction. In the same manner, the anode energizing plate 50 is arranged on and fixed to, in an electrically connected state, the second surface 22a2 of the anode collector 22a in the anode 22 located at the other outermost end in the stacking direction.

### Operation

The operation of the present embodiment will now be described.

In the power storage device 10 in accordance with the present embodiment, the carbon coating layer M is applied to the entire first surface 21a1 of the cathode collector 21a. The seal 24, which is composed of an acid-modified polyolefin resin, is adhered to the carbon coating layer M, which is applied to the first surface 21a1 of the cathode collector 21a. The coating layer binder contained in the carbon coating layer M is composed of a material including a COO structure and a CH structure, with the ratio of the structures being in the specified range described above.

In this case, the first surface 21a1 of the cathode collector 21a is bonded with the coating layer binder contained in the carbon coating layer M. The bond is understood to be either one of or both of an ester bond and a hydrogen bond. The ester bond is a bonding structure (-COOMe) in which a hydroxyl group (Me-OH) of the first surface 21a1 of the cathode collector 21a is ester-bonded to a carboxyl group (-COOH) of the coating layer binder. Here, "Me" refers to a metal composing the collector. The hydrogen bond is a bonding structure in which a hydroxyl group (Me-OH) of the first surface 21a1 of the cathode collector 21a is hydrogen-bonded to either one of or both of a hydroxyl group and a carboxyl group of the substance composing the carbon coating layer M. The hydroxyl group is one of or both of a hydroxyl group (C-OH) of the carbon particle surface and a hydroxyl group (C-OH) of the coating layer binder. The carboxyl group is a carboxyl group (-COOH) of the coating layer binder.

The acid-modified polyolefin resin of the seal 24 is bonded with the carbon particles contained in the carbon coating layer M at the interface of the seal 24 and the carbon coating layer M. The bond is understood to be either one of or both of an ester bond and a hydrogen bond. The ester bond is a bonding structure (-COOC) in which a hydroxyl group (C-OH) of the carbon particle surface is ester-bonded to a carboxyl group (-COOH) of the acid-modified polyolefin resin. The hydrogen bond is a bonding structure in which either one of or both of a hydroxyl group and a carboxyl group of the substance composing the carbon coating layer M is hydrogen-bonded to a carboxyl group (-COOH) of the acid-modified polyolefin resin. The hydroxyl group is one of or both of a hydroxyl group (C-OH) of the carbon particle surface and a hydroxyl group (C-OH) of the coating layer binder. The carboxyl group is a carboxyl group (-COOH) of the coating layer binder. The bonding structures described above are formed at the interface of the cathode collector 21a and the carbon coating layer M and at the interface of the seal 24 and the carbon coating layer M. This adheres the seal 24 with the carbon coating layer M to the first surface 21a1 of the cathode collector 21a.

Further, the ratio of the COO structure and the CH structure in the coating layer binder is in the specific ranged described above. This improves the affinity of the coating layer binder and the acid-modified polyolefin resin composing the seal 24. Thus, the coating layer binder is compatible with and tightly adhered to the acid-modified polyolefin resin at the interface of the seal 24 and the carbon coating layer M.

In this manner, the configuration of the present embodiment has a bonding structure formed at each of the interface of the first surface 21a1 of the cathode collector 21a and the carbon coating layer M and the interface of the seal 24 and the carbon coating layer M. In addition, the coating layer binder contained in the carbon coating layer M is compatible with and tightly adhered to the seal 24. This increases the peel strength of the seal 24 with respect to the cathode collector 21a.

The formation of the carbon coating layer M on the first surface 21a1 of the cathode collector 21a and the tightly joined adhesion of the carbon coating layer M and the seal 24 limit contact of the first surface 21a1 of the cathode collector 21a with the liquid electrolyte. In addition, the carbon coating layer M acts as a barrier limiting the entrance of the liquid electrolyte to the first surface 21a1 of the cathode collector 21a. This also limits contact of the first surface 21a1 of the cathode collector 21a with the liquid electrolyte. Thus, deterioration in the peel strength of the seal 24 with respect to the cathode collector 21a is limited.

More specifically, in a conventional power storage device, for example, when using a liquid electrolyte, which contains LiPF₆ as an electrolyte salt, and a seal, which is composed of an acid-modified polyolefin resin, aging may deteriorate the peel strength of the seal. It is understood that hydrofluoric acid (HF), which is derived from LiPF₆, causes peel strength deterioration of the seal. LiPF₆, for example, reacts with the water (H₂O) contained in the liquid electrolyte and generates the hydrofluoric acid.

In the conventional structure in which the seal is adhered to the surface of the collector, a bonding structure (-COOMe) in which a hydroxyl group (M-OH) in the surface of the collector is ester-bonded to a carboxyl group (-COOH) of the acid-modified polyolefin resin of the seal is formed at the surface of the collector. The seal is adhered to the surface of the collector by the bonding structure (-COOMe). LiPF₆, which is derived from hydrofluoric acid, destructs the bonding structure (-COOM) formed between the seal and the collector. The decreases the peel strength of the seal with respect to the collector. Further, hydrofluoric acid fluorinates (MeF) the surface of the collector. The fluorinated part of the surface of the collector cannot form the bonding structure (-COOMe) again with the seal. This keeps the peel strength of the seal deteriorated. As a result, aging deteriorates the peel strength of the seal. It is considered that such effects also occur in the same manner when using a liquid electrolyte containing a fluorine-containing metal salt other than LiPF₆ as the electrolyte salt.

In the present embodiment, as described above, contact is limited between the first surface 21a1 of the cathode collector 21a and the liquid electrolyte. This maintains the bonding structure formed at the interface of the first surface 21a1 of the cathode collector 21a and the carbon coating layer M, and restricts fluorination of the first surface 21a1 of the cathode collector 21a. As a result, aging-related deterioration of the peel strength of the seal 24 caused by will be delayed.

### Advantages

The present embodiment has the advantages described below.
(1) The power storage device 10 includes the cathode 21, with the cathode active material layer 21b formed on the first surface 21a1 of the cathode collector 21a, and the seal 24, which is adhered to the first surface 21a1 of the cathode 21. The seal 24 is composed of an acid-modified polyolefin resin. The cathode 21 includes the carbon coating layer M applied to a part adhered to the seal 24 in the first surface 21a1 of the cathode collector 21a. The carbon coating layer M contains carbon particles and a coating layer binder. The coating layer binder has, in an IR absorption spectrum measured by an infrared spectrophotometer, a strength ratio (P_{COO}/P_{CH}) from 0.5 to 3.3, inclusive, with respect to a peak (P_{COO}) indicating a COO structure to a peak (P_{CH}) indicating a CH structure.
   With the configuration described above, a bonding structure is formed at the interface of the first surface 21a1 of the cathode collector 21a and the carbon coating layer M and at the interface of the seal 24 and the carbon coating layer M. In addition, the coating layer binder contained in the carbon coating layer M is compatible with and tightly adhered to the seal 24. This increases the peel strength of the seal 24 with respect to the cathode collector 21a.
(2) The coating layer binder contains an acrylic resin.
   With the configuration described above, advantage (1) is further enhanced.
(3) The carbon coating layer M is applied to the entire first surface 21a1 of the cathode collector 21a.
   With the configuration described above, the process for forming the carbon coating layer M is simpler than when the carbon coating layer M is applied to part of the first surface 21a1 of the cathode collector 21a.
(4) The power storage device 10 includes the bipolar electrode 25 with the bipolar collector. In the bipolar collector, the cathode collector 21a (first collector), which includes the first surface 21a1 and the second surface 21a2 at the opposite side of the first surface 21a1, is joined with the anode collector 22a (second collector), which includes the first surface 22a1 and the second surface 22a2 at the opposite side of the first surface 22a1, at the second surfaces. The cathode active material layer 21b (first active material layer) is formed on the first surface 21a1 of the cathode collector 21a. The anode active material layer 22b (second active material layer) is formed on the first surface 22a1 of the anode collector 22a.

With the configuration described above, the peel strength of the seal 24 is increased in the power storage device 10 including the bipolar electrode 25.

(6) The power storage device 10 includes liquid electrolyte containing fluorine-containing metal salt.

The fluorine-containing metal salt contained in the liquid electrolyte may decrease the peel strength of the seal 24. Thus, advantage (1) is particularly effective for increasing the peel strength of the seal 24. Further, aging-related deterioration of the peel strength of the seal 24 will be delayed.

The present embodiment may be modified as described below. The above embodiment and the following modifications can be combined as long as there is no technical contradiction.

The carbon coating layer M may be applied to only a portion of the part adhered to the seal 24 in the first surface 21a1 of the cathode collector 21a. For example, the part adhered to the seal 24 in the first surface 21a1 of the cathode collector 21a may include a portion where the carbon coating layer M is not applied. In any case, preferably, the carbon coating layer M is formed on a part adhered to the seal 24 in the first surface 21a1 of the cathode collector 21a and has a closed shape surrounding the sealed space S. Further, the carbon coating layer M may be applied partially or entirely to the part that is not adhered to the seal 24 in the first surface 21a1 of the cathode collector 21a.

The carbon coating layer M may be applied to the first surface 22a1 of the anode collector 22a instead of the first surface 21a1 of the cathode collector 21a. Further, the carbon coating layer M may be applied to both the first surface 21a1 of the cathode collector 21a and the first surface 22a1 of the anode collector 22a.

The shapes of the cathode collector 21a and the cathode active material layer 21b in plan view are not particularly limited. These elements may have the shape of a polygon such as a rectangle, a circle, or an oval. The same applies to the anode collector 22a and the anode active material layer 22b.

The shape of the seal 24 in plan view is not particularly limited and may be a polygon such as a rectangle, a circle, or an oval.

A conductive layer may be arranged between the cathode energizing plate 40 and the cathode collector 21a in contact with the cathode collector 21a to allow for satisfactory conductive contact therebetween. Examples of a conductive layer include a layer containing carbon, such as acetylene black or graphite, and a layer having a lower hardness than the cathode collector 21a, such as a plated layer of Au or the like. Further, a similar conductive layer may be arranged between the anode energizing plate 50 and the anode collector 22a.

The power storage cells 20 of the power storage device 10 are not particularly limited in number. There may be only one power storage cell 20 in the power storage device 10.

The cathode active material layer 21b or the anode active material layer 22b may be applied to the second surface 21a2 of the cathode collector 21a. Further, the cathode active material layer 21b or the anode active material layer 22b may be applied to the second surface 22a2 of the anode collector 22a.

The power storage device 10 may include a constraining member to constrain the cell stack 30. The constraining member applies a constraining load in the stacking direction of the cell stack 30 to a region in which the power storage cells 20 face each other, in particular, to where the cathode active material layer 21b overlaps the anode active material layer 22b in plan view.

As long as a constraining load can be applied to the cell stack 30, the specific structure of the constraining member is not particularly limited. The constraining member includes, for example, flat constraining plates arranged at the two ends of the cell stack 30 in the stacking direction to sandwich the cell stack 30, and fastening members such as a bolt and nut that fasten together the constraining plates. With the constraining member of the structure described above, the fastening members urge the constraining plates toward each other to apply a constraining load in the stacking direction to the cell stack 30.

### Example

Examples further specifying the above embodiment will now be described.

### IR Absorption Spectrum Measurement of Coating Layer Binder

Commercially available resins 1 to 6 listed in Table 1 were each applied to an aluminum foil to obtain test pieces with different resins applied thereto. In Table 1, SBR refer to styrene-butadiene rubber.

The IR absorption spectrum of each obtained test piece was measured with an infrared spectrophotometer (reflection microscopy) under a condition of 25□. The measured transmitted reflectance R was used to calculate the transmitted light absorption A* (=log(1/R)), and a graph was formed with the horizontal axis representing the wavenumber (cm⁻¹) and the vertical axis representing the transmitted light absorption A*. The transmitted light absorption A* that is the strength of the peak (P_{COO}) in a range from 1680 cm⁻¹ to 1720 cm⁻¹, inclusive, and the transmitted light absorption A* that is the strength of the peak (P_{CH}) in a range from 1400 cm⁻¹ to 1600 cm⁻¹, inclusive, were obtained from the formed graph. Then, the strength ratio (P_{COO}/P_{CH}) of the peak (P_{COO}) to the peak (P_{CH}) was calculated. The results are shown in Table 1. A value obtained by subtracting background from the transmitted light absorption A* was used as the strength of each of the peak (P_{COO}) and the peak (P_{CH}).

**Table 1**

| | Type | Strength·Ratio (P_{COO}/P_{CH}) |
|---|---|---|
| Resin·1 | Acrylic·Resin | 0.66 |
| Resin·2 | Carboxy-Modified·SBR | 0.5 |
| Resin·3 | Carboxy-Modified·SBR | 0.06 |
| Resin·4 | Silicon-Modified·Acrylic·Styrene·Resin | 3.3 |
| Resin 5 | Carboxy·Modified·Acrylic·Styretic·Resin | 2.2 |
| Resin·6 | Hydroxyl-Modified·Acrylic·Resin | 12.6 |

### Preparation of Carbon Paste

Carbon particles, a coating layer binder, carboxy ethylcellulose, and water were kneaded to prepare a carbon paste. Acetylene black was used as the carbon particles. One of resins 1 to 6 was used as the coating layer binder. The mass ratio of the solids in the carbon paste was 50:37.5:12.5 (carbon particles: coating layer binder: CMC). The content of the solvent in the carbon paste was set in order to have the solid percentage be 85 mass%.

### Production of Examples 1 to 4 and Comparative Examples 1 to 3

A corona discharge process was performed on one surface of an aluminum foil, having a thickness of 30 µm, to hydrophilize that surface of the aluminum foil. A carbon paste using resin 1 was applied to the entire hydrophilized surface of the aluminum foil to form a film. The formed film was dried. Then, the film was subjected to heating at 1500 for ten seconds and then cooled to form a carbon coating layer having a thickness of 1 µm. The obtained sheet material was the sheet material of example 1.

The same process as example 1 was performed to obtain the sheet materials of examples 2 to 4 by changing the carbon paste using resin 1 to carbon pastes using resins 2, 4, and 5. Further, the same process as example 1 was performed to obtain the sheet materials of comparative examples 1 and 2 by changing the carbon paste using resin 1 to carbon pastes using resins 3 and 6.

### Peel Test

A rectangular collector having dimensions of 10 mm × 50 cm was cut out from the sheet material of example 1. Further, a seal material having dimensions of 10 mm × 50 mm was prepared. The seal material was an acid-modified polyethylene sheet having a thickness of 150 µm and a melting point Tm1 of 1200. The seal material was laminated onto the surface of the collector on which the carbon coating layer was formed with the ends of seal material aligned with the ends of the collector to obtain a laminate.

Then, an in-pulse sealer was used to heat the laminate at 150□ for ten seconds and then cooled to produce a measurement sample in which the collector and the seal material were adhered together. The obtained measurement sample was subjected to a 90-degree peel test at a tensile speed of 10 mm/min and a temperature of 60□. The strength measured in the 90-degree peel test 90 was divided by the line width of 10 mm to calculate the peel strength of the measurement sample. The results are shown in Table 2.

Further, the sheet material of example 1 was changed to the sheet material of examples 2 to 4 and the sheet material of comparative examples 1 and 2. The results are shown in Table 2.

**Table 2**

| | Coating·Layer·Binder | | Peel ·Strength N/mm |
|---|---|---|---|
| | Type | Strength·Ratio | |
| Example·1 | Resin·1 | 0.66 | 1.5 |
| Example·2 | Resin·2 | 0.5 | 1.112 |
| Example·3 | Resin·4 | 3.3 | 1.016 |
| Example·4 | Resin·5 | 2.3 | 0.753 |
| Comparative Example·1 | Resm·3 | 0.06 | 0.475 |
| Comparative· Example·2 | Resin·6 | 12.6 | 0 |

As shown in Table 2, each of the examples using a coating layer binder with a strength ratio (P_{COO}/P_{CH}) in a range from 0.5 to 3.3, inclusive, had a higher peel strength than comparative example 1 using a coating layer binder with a strength ratio (P_{COO}/P_{CH}) of less than 0.5. Peeling in each example was cohesion failure that occurs within the carbon coating layer and not interface failure that occurs at the interface of the aluminum foil and the carbon coating layer. The results show that the aluminum foil and the seal material are adhered together securely by the carbon coating layer. Further, in comparative example 2 using a carbon coating layer having a strength ratio (P_{COO}/P_{CH}) of greater than 3.3, the sheet material was not adhered to the carbon coating layer.

With regard to the measurement sample of example 1 prior to an immersion process, the interface structure of the seal member and the carbon coating layer was subjected to a Transmission Electron Microscopy-Electron Energy Loss Spectroscopy (TEM-EELS) analysis. The results show that in the interface, there were many gradated regions in which the coating layer binder contained in the carbon coating layer gradually decreased from the carbon coating layer toward the seal material, and the acid-modified polyolefin resin gradually increased from the carbon coating layer toward the seal material. This indicates that the coating layer binder contained in the carbon coating layer is compatible with the acid-modified polyolefin composing the seal material.

## Claims

1. A power storage device, comprising:
electrodes, each including a collector having a first surface on which an active material layer is formed; and
a seal arranged between the electrodes and adhered to the first surfaces of the collectors, wherein
the seal is composed of an acid-modified polyolefin resin,
at least one of the electrodes includes a carbon coating layer applied to a part of the first surface of the collector adhered to the seal,
the carbon coating layer contains carbon particles and a coating layer binder, and
the coating layer binder has, in an IR absorption spectrum measured by an infrared spectrophotometer, a strength ratio (P_{COO}/P_{CH}) from 0.5 to 3.3, inclusive, with respect to a peak (P_{COO}) in a range from 1680 cm⁻¹ to 1720 cm⁻¹, inclusive, to a peak (P_{CH}) in a range from 1400 cm⁻¹ to 1600 cm⁻¹, inclusive.

2. The power storage device according to claim 1, wherein the coating layer binder contains an acrylic resin.

3. The power storage device according to claim 1 or 2, wherein the carbon coating layer is applied entirely to the first surface of the collector.

4. The power storage device according to any one of claims 1 to 3, wherein the first surface of the collector is composed of aluminum.

5. The power storage device according to any one of claims 1 to 4, wherein
the electrode is a bipolar electrode,
the collector is a bipolar collector in which a first collector, including a first surface and a second surface located at an opposite side of the first surface, is joined with a second collector, including a first surface and a second surface located at an opposite side of the first surface, at the second surfaces,
a first active material layer serving as the active material layer is formed on the first surface of the first collector, and
a second active material layer serving as the active material layer is formed on the first surface of the second collector.

6. The power storage device according to claim 5, wherein
the first surface of the first collector is composed of aluminum, and
the first surface of the second collector is composed of copper.

7. The power storage device according to claim 5 or 6, wherein the carbon coating layer is applied to a part adhered to the seal in both the first surface of the first collector and the second surface of the second collector.

8. The power storage device according to any one of claims 1 to 7, wherein
a liquid electrolyte is arranged between the electrodes, and
the liquid electrolyte contains fluorine-containing metal salt.

9. A power storage device, comprising:
a first electrode including a first collector having a first surface with a central portion on which a first active material layer is arranged;
a second electrode including a second collector having a first surface with a central portion on which a second active material layer is arranged, with the second active material layer facing the first active material layer on the first electrode;
a separator located between the first active material layer and the second active material layer;
a seal arranged between the first electrode and the second electrode so as to surround the first active material layer and the second active material layer, the seal being adhered to the first surface of each of the first collector and the second collector so to form a sealed space between the first electrode and the second electrode for accommodating liquid electrolyte, wherein
the seal is composed of an acid-modified polyolefin resin,
the first electrode includes a carbon coating layer applied to a part adhered to the seal in the first surface of the first collector,
the carbon coating layer contains carbon particles and a coating layer binder, and
the coating layer binder has, in an IR absorption spectrum measured by an infrared spectrophotometer, a strength ratio (P_{COO}/P_{CH}) from 0.5 to 3.3, inclusive, with respect to a peak (P_{COO}) in a range from 1680 cm⁻¹ to 1720 cm⁻¹, inclusive, to a peak (P_{CH}) in a range from 1400 cm⁻¹ to 1600 cm⁻¹, inclusive.

10. The power storage device according to claim 9, wherein the carbon coating layer is applied to a part adhered to the seal on both the first surface of the first collector and the first surface of the second collector.
